# EUROPÄISCHE PATENTSCHRIFT

(11) **EP 0 537 616 B1**
(45) Veröffentlichungstag und Bekanntmachung des Hinweises auf die Patenterteilung: **15.03.1995**
(21) Anmeldenummer: 92117147.6
(22) Anmeldetag: 08.10.1992
(51) Int. Cl.: B01D 53/00, B01D 5/00

(54) **Verfahren zur Abtrennung von Fluorchlorkohlenwasserstoffen aus Gasgemischen**
Process for separating of fluoro-chloro-hydrocarbons from gas mixtures
Procédé pour séparer des hydrocarbures fluorés-chlorés de mélanges gazeux

(30) Priorität: 12.10.1991 DE 4133916
(43) Veröffentlichungstag der Anmeldung: 21.04.1993
(73) Patentinhaber: BRESCH ENTSORGUNG GmbH, D-24539 Neumünster (DE)
(72) Erfinder: Landahl, Claus-Dieter, W-2351 Gross-Kummerfeld (DE)

(56) Entgegenhaltungen:
- EP-A- 0 458 171
- GB-A- 1 569 073

## Beschreibung

Die vorliegende Erfindung betrifft ein Verfahren zur Abtrennung von Fluorchlorkohlenwasserstoffen aus Gas-Gemischen durch mindestens zweistufiges Abkühlen des Gas-Gemisches unter einem Druck von 5 bis < 10 bar.

Es ist allgemein bekannt, daß Fluorchlorkohlenwasserstoffe (FCKW's) zwar aufgrund ihrer chemischen Stabilität, Unbrennbarkeit und hohen Verdampfungswärme als Kühlmittel sehr gut geeignet sind, daß andererseits jedoch in die Atmosphäre gelangende FCKW's die Ozonschicht in der Stratosphäre schädigen. Es ist daher bei der Entsorgung von FCKW's enthaltenden Geräten, -insbesondere Kühlgeräten, von großer Bedeutung, das Entweichen der FCKW's in die Atmosphäre zu vermeiden. In Kühlaggregaten als Kühlflüssigkeit eingesetzte FCKW's sind vor allem die Typen R11 (CCl₃F), R12 (CCl₂F₂), R22 (CHClF₂) und R502 (ein Gemisch aus CHClF₂ und CClF₂CF₃).

FCKW's befinden sich jedoch nicht nur in Kühlaggregaten, sondern auch in Kunststoffschäumen, da diese Schäume, insbesondere Polyurethanschäume, mit FCKW's als Treibmittel hergestellt werden. Das wichtigste, weitaus überwiegend verwendete Treibmittel ist R11. Bekanntlich werden Polyurethanschäume in großem Umfang technisch eingesetzt, insbesondere als Isoliermaterialien etwa im Baugewerbe, aber auch in Kühlschränken.

Während die Entfernung der FCKW's aus Kühlaggregaten bekannter Stand der Technik ist, ist es bisher nicht gelungen, die in den Schäumen vorhandenen Treibmittel vollständig zu entfernen, ebenso ist es nicht gelungen, den aus den Schäumen abgetrennten Fluorchlorkohlenwasserstoff, der üblicherweise nach dem Abtrennen in unterschiedlicher Konzentration mit Luft gemischt ist, aber auch mit anderen Gasen, z. B. Stickstoff, gemischt sein kann, vollständig aus dem Luft/FCKW-Gemisch zurückzugewinnen.

Obgleich die FCKW's in einer Reinheit von > 99 Gew.-% eingesetzt werden, enthalten sie zahlreiche Verunreinigungen im ppm-Bereich. Solche Substanzen sind u. a. in R11

| | |
|---|---|
| 1,2-Dichlorpropan | 79 ppm |
| Cyclohexen | 55 ppm |
| N, N-Diethylethanamin | 82 ppm |
| Trichlorethen | 914 ppm |
| Chlorbenzol | 1 200 ppm |
| 2-Butanon | 98 ppm |

Die Anmelderin hat nunmehr ein Verfahren entwickelt, das erstmalig die vollständige Rückgewinnung des FCKW's aus einem Gasgemisch, insbesondere des R11, möglich macht.

Das Verfahren ist dadurch gekennzeichnet, daß das Gas-Gemisch auf 5 bis < 10 bar, vorzugsweise auf 6 bis 9 bar und besonders bevorzugt auf 6,5 bis 8 bar komprimiert wird und in mindestens 2 Stufen abgekühlt wird, wobei in der ersten Kühlstufe auf > 0 bis 25 °C, vorzugsweise auf 5 bis 15 °C abgekühlt wird und Wasser mit einer geringen Menge an FCKW abgeschieden wird und in der zweiten Kühlstufe der FCKW möglichst vollständig verflüssigt wird.

Die das R11 enthaltende Luft wird über einen Trockner und einen Wärmetauscher durch einen Kompressor angesaugt. Der Kompressor ist bevorzugt ölfrei und mit Teflon beschichtet.

Das R11/Luft-Gemisch wird auf einen Druck von 5 bis<10 bar komprimiert, wobei 5 bar aus wirtschaftlichen Gründen nicht unterschritten werden sollten, da niedriger Druck eine hohe Kühlleistung erforderlich macht, um das R11 zu verflüssigen. Andererseits hat die Anmelderin überraschend gefunden, daß bei 10 bar chemische Umwandlungen zwischen den Verunreinigungen auftreten, die zu teilweise stark toxischen Verbindungen führen.

Die Untersuchungen haben zu dem Ergebnis geführt, daß der Druck bevorzugt bei 6 bis 9 bar und besonders bevorzugt bei 6,5 bis 8 bar liegen sollte. So kann man beispielsweise wirtschaftlich und ohne unerwünschte chemische Umsetzungen bei 7 bar arbeiten.

Da am Kompressorausgang eine relativ hohe Temperatur im R11/Luft-Gemisch von etwa 70 bis 100 °C auftritt, wird das Gas-Gemisch zunächst durch einen Wärmetauscher abgekühlt und anschließend der ersten Kühlstufe zugeführt. Es hat sich erfindungsgemäß als vorteilhaft erwiesen, als Kühlstufe einen sogenannten Stangenkühler mit geraden Rohren in bestimmter Länge einzusetzen, hierdurch wird ein störungsfreies Durchströmen des R11/Luft-Gemisches erreicht. Koaxial konstruierte Kühlstufen haben sich dagegen nicht gut bewährt.

In der ersten Kühlstufe wird auf > 0 bis 25 °C, vorzugsweise auf 6 bis 15 °C abgekühlt. So ist beispielsweise eine Ausgangstemperatur von 9, 10, 11 oder 12 °C sehr gut geeignet. Bei dieser Temperatur kondensiert im R11/Luft-Gemisch enthaltene Feuchtigkeit, die als kleine Mengen an R11 enthaltenes Wasser abgezogen werden kann. Dieses Gemisch wird gesondert in Flaschen abgefüllt und von der R11 erzeugenden, bzw. vermarktenden Firma übernommen.

Das Kühlmittel für die erste Kühlstufe wird über einen gesonderten Kühlkreislauf zugeführt, der Kompressor, Kondensator, Sammler und Trockner enthält.

Das R11/Luft-Gemisch gelangt nunmehr in eine zweite Kühlstufe. Auch diese Kühlstufe ist vorteilhafterweise ein Stangenverdampfer.

In der zweiten Kühlstufe wird bei 7 bar auf -50 bis -60 °C abgekühlt. Hierbei fließt das R11 flüssig in einen Sammler ab, aus dem es in Flaschen abgefüllt wird.

Die verbleibende kalte Luft wird den Wärmetauschern vor und hinter dem Kompressor zugeführt. Anschließend strömt die noch geringe Anteile an R11 enthaltende Luft über einen Aktivkohlefilter, durch welches das R11 vollständig abgeschieden wird. Das durch Regenerieren der Aktivkohle gewonnene R11 kann dem Kreislauf ebenfalls wieder zugeführt werden.

Die Kühlung der zweiten Kühlstufe erfolgt durch einen zweistufigen Busterkreislauf.

Eine weitere kalte Luftmenge wird aus dem R11-Sammler vor der Abfüllung abgezogen und vor den Kompressor gefahren.

Das erfindungsgemäße Verfahren ist sehr flexibel bezüglich der Konzentration an R11 im R11/Luft-Gemisch. So können sehr verdünnte R11-Konzentrationen beispielsweise unter 1 Volumenprozent und auch sehr hohe Konzentrationen bis zu reinem R11 erfindungsgemäß vollständig abgetrennt und zurückgewonnen werden. Erfindungsgemäß können mehr als zwei Kühlstufen eingesetzt werden. Es hat sich jedoch als besonders wirtschaftlich erwiesen, eine Anlage mit zwei Kühlstufen zu betreiben. Da die vor und hinter den Kompressor installierten Wärmetauscher erheblichen Temperaturdifferenzen ausgesetzt sind, eignen sich nur spezielle Konstruktionen. Ein geeigneter Wärmetauscher ist der sogenannte Danfoss-Tauscher.

Das erfindungsgemäße Verfahren kann in Anlagen mit in weiten Grenzen schwankenden Einsatzmengen betrieben werden. Beispielhaft seien genannt 10 bis 15 m³/h an R11/Luft-Gemisch. Diese Angaben sind jedoch nicht als limitierend anzusehen.

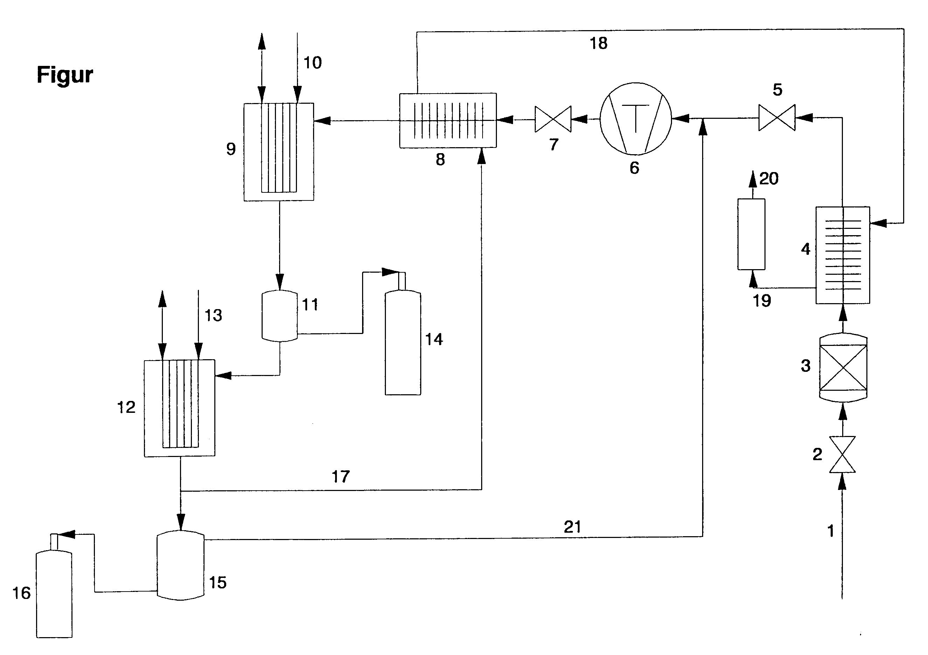

Das erfindungsgemäße Verfahren soll mit Hilfe der Figur näher erläutert werden.

Über Leitung 1 tritt das FCKW/Luft-Gemisch, das aus einer Abtrennanlage von FCKW aus Polyurethanschaum stammen kann, über ein Rückschlagventil 2 in den Trockner 3 ein. Das getrocknete Gas-Gemisch wird durch den Wärmetauscher 4 und Rückschlagventil 5 durch den Kompressor 6 angesaugt und über Ventil 7 durch den Wärmetauscher 8 gedrückt. Von dort gelangt das Gas-Gemisch in die erste Kühlstufe 9. Diese wird durch Kühlkreislauf 10 gekühlt. Aus 9 tritt das abgekühlte Gas-Gemisch über Sammler 11 in die zweite Kühlstufe 12. Diese wird durch den Kühlkreislauf 13 gekühlt. Aus Sammler 11 wird wenig FCKW enthaltendes Wasser in Vorratsflasche 14 abgefüllt. Aus 12 fließt der verflüssigte FCKW in Sammler 15, aus dem er in Vorratsflasche 16 abgefüllt wird. Über die Leitungen 17 und 18 fließt kalte, nur noch sehr wenig FCKW enthaltende Luft durch die Kühler 8 und 4 in den Aktivkohle-Adsorber 19. Dort tritt über Leitung 20 FCKW-freie Luft aus. Über Leitung 21 kann kalte, nur noch wenig FCKW enthaltende Luft auch vor den Kompressor 6 geleitet werden.

## Patentansprüche

1. Verfahren zur Abtrennung von Fluorchlorkohlenwasserstoffen aus Gas-Gemischen, dadurch gekennzeichnet, daß das Gas-Gemisch auf 5 bis < 10 bar komprimiert wird und in mindestens 2 Stufen abgekühlt wird, wobei in der ersten Kühlstufe auf > 0 bis 25 °C abgekühlt wird und Wasser mit einer geringen Menge an Fluorchlorkohlenwasserstoff abgeschieden wird und in der zweiten Kühlstufe die Fluorchlorkohlenwasserstoffe möglichst vollständig verflüssigt werden.

2. Verfahren nach Anspruch 1, wobei das Gas-Gemisch auf 6 bis 9 bar komprimiert wird.

3. Verfahren nach Ansprüchen 1 und 2, wobei das Gas-Gemisch auf 6,5 bis 8 bar komprimiert wird.

4. Verfahren nach Ansprüchen 1 bis 3, wobei in der ersten Kühlstufe auf 5 bis 15 °C abgekühlt wird.

5. Verfahren nach Anspruch 1 bis 4, dadurch gekennzeichnet, daß das von Fluorchlorkohlenwasserstoff weitgehend befreite Gas hinter der zweiten Kühlstufe abgetrennt wird und einem oder mehreren Wärmetauschern vor der ersten Kühlstufe zugeführt wird, wobei das ankommende Fluorchlorkohlenwasserstoff/Gas-Gemisch abgekühlt wird.

6. Verfahren nach den Ansprüchen 1 bis 5, dadurch gekennzeichnet, daß das Gas hinter den Wärmetauschern einem Aktivkohlefilter zugeführt wird.

7. Verfahren nach den Ansprüchen 1 bis 6, dadurch gekennzeichnet, daß die Kühlstufen Stangenverdampfer sind.

8. Verfahren nach den Ansprüchen 1 bis 7, dadurch gekennzeichnet, daß zum Komprimieren ein ölfreier, teflonbeschichteter Kompressor eingesetzt wird.

## Claims

1. Process for the separation of fluorochlorohydrocarbons from gas mitures, characterized in that the gas mixture is pressurized to a pressure of 5 to < 10 bar and cooled down in at least two steps, whereby in the first cooling-step a temperature of > 0 to 25 °C is maintained and water including a small quantity of fluorochlorohydrocarbons is separated and in the second cooling step the fluorochlorohydrocarbons are liquified up to complete liquifaction.

2. Process according to claim 1, characterized in that the gas mixture is pressurized to a pressure of 6 to 9 bar.

3. Process according to claim 1, characterized in that the gas mixture is pressurized to a pressure of 6.5 to 8 bar.

4. Process according to claims 1-3, characterized in the first cooling step a temperature of 5 to 15 °C is maintained.

5. Process according to claims 1-4, characterized in that the gas which is up to completely free of fluorochlorohydrocarbons is separated after the second cooling step and is supplied to one or several heat-exchangers in order to cool the feed gas consisting of a fluorochlorohydrocarbons containing gas mixture.

6. Process according to claim 1 -5, characterized in that after having passed the heat-exchanger(s) the gas is passed through an active carbon filter.

7. Process according to claim 1-6, characterized in that the cooling devices are longtube evaporators.

8. Process according to claim 1-7, characterized in the compressor is an oil-free, tefloncoated device.

## Revendications

1. Procédé pour la séparation des fluorochlorecarbons d'un mélange des gaz, caractérisé en ce que le mélange des gaz est soumis a une pression de 5 à <10 bars et ensuite en ce qu'on réfroidis le mélange au moins dans deux étapes de sorte que l'on réfroidisse à la première étape le melange d' une température de > 0 à 25 °C et ensuite on sépare l'eau avec une petite quantité des fluorchlorecarbons.
A la deuxième étape on liquéfie la totalité des fluorchlorecarbon.

2. Procédé selon la revendication 1, caractérisé en ce que le mélange est soumis à une pression de 6 à 9 bars.

3. Procédé selon l'une des revendications 1 et 2, caractérisé en ce que le mélange des gaz est soumis à une pression de 6,5 à 8 bars.

4. Procédé selon l'une des revendications 1 à 3, caractérisé en ce que la premiére étape de refroidissement comprend une température de 5 à 15 °C.

5. Procédé selon l'une des revendications 1 à 4, caractérisé en ce que le gaz étant exempt des fluorchlorecarbon est séparé après la deuxième étape de refroidissement et ensuite est admis à un ou plusieurs échangeurs de chaleur de sorte que l'on refroidisse contre courrant le gaz chargé, etant composé des fluorchlorecarbons dans un mélange des gaz.

6. Procédé selon l'une des revendications 1 à 5, caractérisé en ce que le gaz ayant passé l'echangeur de chaleur ensuite est conduit à travers un filtre de charbon actif.

7. Procédé selon lune des revendications 1 à 6, caractérisé en ce que les échangeurs de chaleur sont des évaporateur comprenant des tubes longs.

8. Procédé selon lune des revendications 1 à 7, caractérisé en ce que le compresseur est excempt de l'huile et est enrobé par le téflon.
